# EUROPÄISCHE PATENTSCHRIFT

(11) **EP 1 346 137 B1**
(45) Veröffentlichungstag und Bekanntmachung des Hinweises auf die Patenterteilung: **27.12.2006**
(21) Anmeldenummer: 01995549.1
(22) Anmeldetag: 29.11.2001
(51) Int. Cl.: F02B 37/24, F02D 33/02

(54) **VORRICHTUNG ZUM SCHALTEN EINES ABGASTURBOLADERS UND ABGASTURBOLADER**
DEVICE FOR OPERATING A TURBOCHARGER AND A TURBOCHARGER
DISPOSITIF PERMETTANT DE COMMANDER UN TURBOCOMPRESSEUR A GAZ D'ECHAPPEMENT ET TURBOCOMPRESSEUR A GAZ D'ECHAPPEMENT ASSOCIE

(30) Priorität: 14.12.2000 DE 10062184
(43) Veröffentlichungstag der Anmeldung: 24.09.2003
(73) Patentinhaber: ROBERT BOSCH GMBH, 70442 Stuttgart (DE)
(72) Erfinder: MEIER, Frank, 70806 Kornwestheim (DE); BLEILE, Thomas, 70435 Stuttgart (DE)
(86) Internationale Anmeldenummer: PCT/DE2001/004476
(87) Internationale Veröffentlichungsnummer: WO 2002/048520

(56) Entgegenhaltungen:
- US-A- 5 224 853

## Beschreibung

### Technisches Gebiet

Die vorliegende Erfindung betrifft eine Vorrichtung zum Schalten von Abgasturboladern für Verbrennungsmotoren, insbesondere für Dieselmotoren, sowie einen Abgasturbolader gemäß den unabhängigen Patentansprüchen 1 und 7.

### Stand der Technik

Insbesondere bei den modernen Dieselmotoren werden zunehmend Abgasturbolader eingesetzt, die eine verstellbare Turbinengeometrie aufweisen. Durch die variable Turbinengeometrie, mit welcher das Aufstauverhalten der Turbine kontinuierlich veränderbar ist, kann eine energetisch günstigere Regelung des Abgasturboladers erreicht werden, da jeweils die vollständige Energie aus dem Abgas genutzt werden kann. Der Abgasturbolader kann jeweils an den aktuellen Motorbetriebspunkt angepaßt werden, wodurch eine Optimierung hinsichtlich der Abgasemissionen und des Kraftstoffverbrauchs ermöglicht wird. Derartige Abgasturbolader werden in bestimmten Motorbetriebsbereichen von einem geregelten Betrieb mittels Abschalten des Ladedruckreglers in einen gesteuerten Betrieb geschaltet. Dieses Umschalten kann bei Abgasturboladern mit verstellbarer Turbinengeometrie zu folgenden Problemen führen: Wenn der Verbrennungsmotor mit niedrigen Motordrehzahlen und kleinen Einspritzmengen betrieben wird, sind hohe Ladedrücke erwünscht, weshalb der Turbinenleitapparat des Abgasturboladers dann in eine geschlossene Position übergeführt wird. Das Schließen des Turbinenleitapparates kann in dem Zeitpunkt eines Überganges vom geregelten Betrieb zu dem gesteuerten Betrieb des Motors jedoch dazu führen, daß der Verdichter des Abgasturboladers für eine gewisse Zeit in einem Arbeitspunkt betrieben wird, der im Verdichterkennfeld als "Verdichterpumpen" bezeichnet wird. Dies führt dazu, daß der Frischluftmassenstrom und der rückgeführte Abgasmassenstrom in eine starke Schwingung versetzt werden, weshalb zum einen die Abgasemissionswerte verschlechtert werden und zum anderen laute Strömungsgeräusche im Luftansaugsystem des Fahrzeugs auftreten können. Des weiteren kann ein solches "Verdichterpumpen" die Motorleistung kurzzeitig beeinträchtigen, wenn z. B. die Einspritzmenge durch die starke Pulsation der vom Motor angesaugten Luft beschränkt wird. Hierdurch wird der Fahrkomfort verschlechtert.

### Darstellung der Erfindung

Es ist die Aufgabe der vorliegenden Erfindung, eine Schaltvorrichtung für Abgasturbolader sowie einen Abgasturbolader mit variabler Turbinengeometrie bereitzustellen, welcher in allen Betriebsbereichen gleichmäßig und optimal arbeitet, wobei insbesondere in dem Übergangsbereich zwischen dem geregelten und gesteuerten Betrieb des Abgasturboladers die Arbeitsweise des Abgasturboladers verbessert werden soll. Diese Aufgabe wird mit einer Vorrichtung gemäß Anspruch 1 und einem Abgasturbolader gemäß Anspruch 7 gelöst. Vorteilhafte Ausgestaltungen und Weiterbildungen sind Gegenstand der jeweiligen Unteransprüche.

### Vorteile der Erfindung

Durch die Verzögerungseinrichtung, mit welcher das Schaltsignal zum Schalten des Ladedruckreglers zeitverzögert erzeugt wird, wird der Ladedruckregler beim Übergang von dem geregelten Betrieb in den gesteuerten Betrieb noch eine bestimmte Zeit eingeschaltet gelassen. Hierdurch wird der aktuelle Ladedruck des Abgasturboladers auf einen Wert abgesenkt, bei dem ein "Verdichterpumpen" nicht auftritt. Dadurch, daß der Ladedruckregler den aktuellen Ladedruck dementsprechend absenkt, ergibt sich eine vorteilhafte Reduzierung von Strömungsgeräuschen im Luftansaugsystem des Fahrzeugs. Des weiteren wird es hierdurch möglich, daß im gesteuerten Betrieb des Ladedruckreglers größere stationäre Ladedrücke erreicht werden, wodurch sich bei einem anschließenden Beschleunigen des Fahrzeugs ein Dynamikvorteil ergibt. Die Motorleistung ist hierdurch in allen Betriebszuständen des Motors und des Abgasturboladers wesentlich verbessert. Außerdem werden durch die Erfindung die Abgasemissionswerte der Motoren reduziert.

Nach einer vorteilhaften Ausgestaltung der Erfindung ist das Schaltsignal zum Schalten vom geregelten in den ungeregelten Betrieb in Abhängigkeit vom Betriebszustand des Motors variabel verzögerbar. Hierdurch kann die Vorrichtung dynamisch auf verschiedene Betriebszustände des jeweiligen Motors reagieren, weshalb die Effektivität der Verzögerung des Umschaltens erhöht wird. Das Abgasverhalten und die Fahrzeugdynamik werden weiter verbessert.

Nach einer weiteren vorteilhaften Ausgestaltung der Erfindung ist die Verzögerungseinrichtung mit einer motorenabhängigen Zeitkonstante versehen. Durch diese Zeitkonstante, welche typenabhängig bei verschiedenen Motoren optimal auswählbar ist, kann die Vorrichtung auch an verschiedene Motorentypen angepaßt werden. Durch die einmal fest eingestellte Zeitkonstante ist die Vorrichtung auf einfache Weise und kostengünstig herstellbar.

Nach einer weiteren vorteilhaften Ausgestaltung der Erfindung ist zum Erzeugen des Schaltsignals eine Hystereseschaltung vorgesehen mit einer oberen Kennlinie und einer unteren Kennlinie als Schaltschwellen. Beim Überschreiten dieser Schaltschwellen wird vorteilhafterweise das Schaltsignal nicht direkt, sondern zeitverzögert erzeugt, weshalb der Abgasturbolader auch in dem Übergangsbereich zwischen geregeltem und gesteuertem Betrieb in einem Arbeitsbereich betrieben werden kann, der ein "Verdichterpumpen" vermeidet.

Nach einer weiteren vorteilhaften Ausgestaltung der Erfindung ist die Vorrichtung angepaßt zum nachträglichen Einbau in bestehende Abgasturboladersysteme. Dies hat den Vorteil, daß die Vorrichtung auch nachträglich zur Verbesserung der Fahrzeugdynamik und Abgasemissionen in Turboladersysteme eingebaut werden kann. Auch bestehende Motoren können also diesbezüglich optimiert werden.

Der Abgasturbolader zum Verdichten des Luftmassenstromes gemäß Anspruch 7 weist eine variable Turbinengeometrie auf zum Verstellen des Verdichtungsverhältnisses sowie eine Verzögerungseinrichtung zum zeitverzögerten Umschalten des Ladedruckreglers von einem geregelten Betrieb in einen gesteuerten Betrieb. Nach einer vorteilhaften Ausgestaltung ist die Verzögerungseinrichtung in dem Ladedruckregler integriert, d.h. es ist kein zusätzliches Bauteil erforderlich.

Nach einer diesbezüglichen vorteilhaften Ausgestaltung ist die Verzögerungseinrichtung ein Bestandteil einer zentralen Motorsteuerungseinrichtung. Hierbei ergibt sich ein Vorteil, da alle Steuerungssysteme zusammengefaßt sind und somit kurze Wege zwischen der Signalerzeugung und -verarbeitung vorliegen.

### Zeichnung

Anhand der Zeichnung wird die Erfindung nachstehend näher erläutert.

Es zeigen:
- Figur 1: eine schematische Darstellung des erfindungsgemäßen Ausführungsbeispiels mit Ladedruckregler und Abgasturbolader; und
- Figur 2: ein Blockschaltbild der Verzögerungseinrichtung des Ausführungsbeispiels nach Figur 1;
- Figur 3a: das Tastverhältnis des Ladedruckstellers und die Frischluftmasse über den Zeitablauf beim Umschalten eines Abgasturboladers nach dem Stand der Technik; und
- Figur 3b: das Tastverhältnis des Ladedruckstellers und die Frischluftmasse beim Umschalten eines Abgasturboladers zeitverzögert mit einer erfindungsgemäßen Vorrichtung.

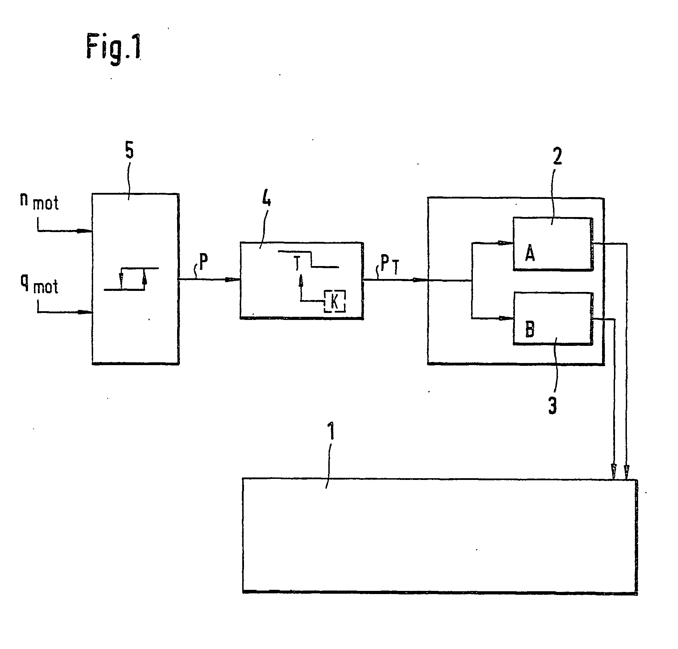

In Figur 1 ist die Vorrichtung zum Schalten eines Abgasturboladers nach der Erfindung schematisch in einer Gesamtansicht dargestellt. Ein Abgasturbolader 1, welcher eine variable Turbinengeometrie aufweist, wird durch einen Ladedruckregler 2 geregelt. Die variable Turbinengeometrie kann in bekannter Weise z. B. über verstellbare Leitschaufeln des Turboladers realisiert sein oder eine andere bekannte Ausgestaltung aufweisen. In bestimmten Betriebszuständen des - in der Zeichnung nicht dargestellten - Motors wird von einem geregelten Betrieb A mittels des Ladedruckreglers 2 in einen ungeregelten Betrieb B durch eine Ladedrucksteuerung 3 umgeschaltet. Das Umschalten erfolgt über ein Schaltsignal P, welches in einer Hystereseschaltung 5 über die Motordrehzahl und die Einspritzmenge als Eingangsgrößen erzeugt wird. Die Hystereseschaltung 5 weist eine obere Kennlinie und eine untere Kennlinie auf, bei deren Überschreiten bzw. Unterschreiten jeweils das Schaltsignal P erzeugt wird. Das Schaltsignal P wird an eine Verzögerungseinrichtung 4 geleitet, mittels welcher ein verzögertes Schaltsignal P_{T} erzeugt wird. Das verzögerte Schaltsignal P_{T} wird an den Ladedruckregler 2 und den Ladedrucksteller 3 weitergegeben zum Schalten zwischen den Betriebsarten A und B. Für die zeitliche Verzögerung des Schaltsignals P in der Verzögerungseinrichtung 4 ist in der Verzögerungseinrichtung 4 eine Zeitkonstante K abgelegt bzw. gespeichert. Um diese Zeitkonstante wird das Eingangssignal P in der Verzögerungseinrichtung 4 zeitlich verzögert. Die Zeitkonstante K kann zur Anpassung an verschiedene Motorentypen variiert werden. Alternativ kann die Zeitkonstante K auch durch eine variable Zeitverzögerungsgröße ersetzt werden, die sich beispielsweise in Abhängigkeit vom Betriebszustand des Motors verändern läßt. Es versteht sich von selbst, daß die Bestimmung der zeitlichen Verzögerung in der Verzögerungseinrichtung 4 auch auf jedwede andere Weise realisiert sein kann.

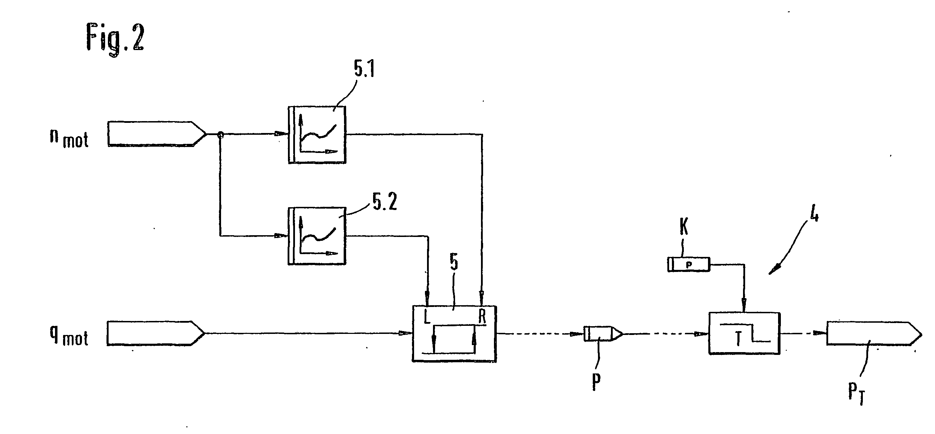

In Figur 2 ist die erfindungsgemäße Verzögerungseinrichtung des Ausführungsbeispiels aus Figur 1 in Form eines Blockschaltbildes dargestellt. Das Schaltsignal P wird von einer Hystereseschaltung 5 gebildet, welche als Eingangssignale die Einspritzmenge qₘₒₜ erhält. Die Hystereschaltung 5 besteht aus einer oberen Kennlinie 5.1 und einer unteren Kennlinie 5.2, welche jeweils den Schwellenwert für die Motordrehzahl nₘₒₜ bilden. Beim Überschreiten einer der Kennlinien 5.1, 5.2 wird in der Schaltung 5 das Signal P erzeugt, welches den Betrieb des Abgasturboladers von dem geregelten Betrieb A in den ungeregelten Betrieb B schalten soll. Zum Vermeiden des "Verdichterpumpens", welches beim Umschalten von Abgasturboladern mit variabler Turbinengeometrie auftreten kann, wird das Signal P in einer Verzögerungseinrichtung 4 um eine zeitliche Konstante K so verzögert, daß erst mit dem verzögerten Schaltsignal P_{T} der, in der Zeichnung nicht dargestellte, Ladedruckregler 2 abgeschaltet wird. Hierdurch wird der aktuelle Ladedruck im Verdichter auf einen Wert abgesenkt, bei dem ein "Verdichterpumpen", das sich in einem starken Schwanken des angesaugten Luftmassenstromes und damit des rückgewonnenen Abgasvolumenstroms äußert, nicht auftritt.

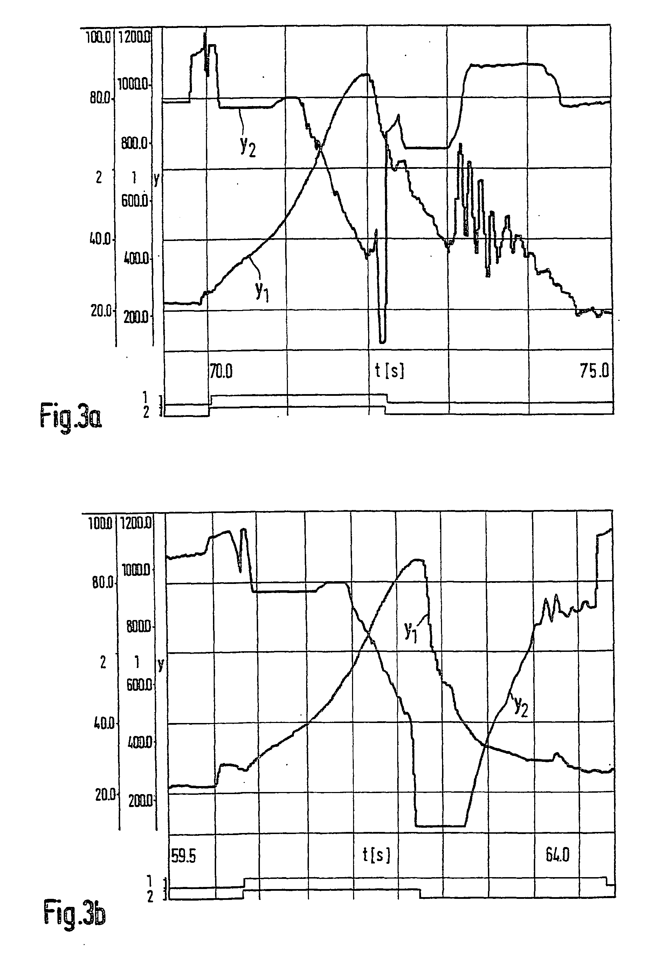

Die Figur 3a zeigt ein Diagramm des Tastverhältnisses des Ladedruckstellers und des Frischluftmassenstroms über die Zeit beim Umschalten eines Abgasturboladers nach dem Stand der Technik. Demgegenüber stellt Figur 3b das gleiche Diagramm dar mit dem Unterschied, daß hier eine erfindungsgemäße Vorrichtung eingesetzt wurde. In dem unteren Bereich der Figur 3a ist ersichtlich, daß die Impulse t1 und t2 zeitgleich gegeben werden, das bedeutet, daß der Ladedruckregler 2 zeitlich unverzögert abgeschaltet wird. Das Schaltsignal P wird direkt an den Ladedruckregler 2 gegeben. Im rechten Bereich ist deutlich erkennbar, daß der Verlauf des Frischluftmassenstroms y₁ kurz nach dem unverzögerten Abschalten des Ladedruckreglers auf hohe Werte springt und das Tastverhältnis des Ladedruckstellers y₂ bei der Reglerabschaltung sofort zu großen Werten springt. Dies bedeutet, daß hier das Abschalten des Ladedruckreglers zum sog. "Verdichterpumpen" führt.

In der Figur 3b demgegenüber ist eine erfindungsgemäße Vorrichtung vorgesehen, weshalb hier die entsprechenden Verläufe gleichmäßiger sind. Das Abschalten erfolgt um 2 sec zeitverzögert, was an den zeitlich verzögerten Impulsen t1 gegenüber t2 ersichtlich ist. Auf diese Weise wird der Ladedruckregler noch um 2 sec länger eingeschaltet gelassen, weshalb der Verlauf des Frischlufimassenstroms y₁ gleichmäßig im rechten Bereich des Diagramms abfällt. Auch das Tastverhältnis des Ladedruckstellers y₂ springt nicht mehr zu Werten, sondern steigt gleichmäßig an. Hierdurch ist die Wirksamkeit der erfindungsgemäßen Vorrichtung dargestellt, die effektiv das "Verdichterpumpen" bei Abgasturboladern mit verstellbarer Turbinengeometrie beim Umschalten der Betriebsarten verhindert.

### Bezugszeichenliste

- 1: Abgasturbolader
- 2: Ladedruckregler
- 3: Ladedrucksteuerung
- 4: Verzögerungseinrichtung
- 5: Hystereseschaltung
- 5.1: obere Kennlinie der Hystereseschaltung
- 5.2: untere Kennlinie der Hystereseschaltung

- nₘₒₜ: Motordrehzahl
- qₘₒₜ: Einspritzmenge
- P: Schaltsignal
- P_{T}: verzögertes Schaltsignal
- T: Verzögerung
- K: Verzögerungskonstante
- t₁, t₂: Zeitimpulse
- y₁: Frischluftmassenstrom
- y₂: Tastverhältnis Ladedrucksteller

## Patentansprüche

1. Vorrichtung zum Schalten eines Abgasturboladers (1) für Verbrennungsmotoren, welcher eine variable Turbinengeometrie aufweist, insbesondere eines Abgasturboladers für Dieselmotoren, mit einem Ladedruckregler (2) zum Regeln des Ladedrucks, wobei der Abgasturbolader (1) mittels eines Schaltsignals P von einem geregelten Betrieb A mit dem Ladedruckregler (2) in einen ungeregelten Betrieb B mit einer Ladedrucksteuerung (3) geschaltet wird,
**dadurch gekennzeichnet, daß**
eine Verzögerungseinrichtung (4) vorgesehen ist, mit welcher das Schaltsignal P zeitverzögert erzeugbar ist.

2. Vorrichtung nach Anspruch 1, **dadurch gekennzeichnet, daß** die das Schaltsignal P in Abhängigkeit vom Betriebszustand des Motors variabel verzögerbar ist.

3. Vorrichtung nach Anspruch 1 oder 2, **dadurch gekennzeichnet, daß** die Verzögerungseinrichtung (4) eine motorenabhängige Zeitkonstante K aufweist.

4. Vorrichtung nach Anspruch 3, **gekennzeichnet durch** eine Zeitkonstante K von 2 sec.

5. Vorrichtung nach einem der vorhergehenden Ansprüche, **dadurch gekennzeichnet, daß** zum Erzeugen des Schaltsignals P eine Hystereseschaltung (5) vorgesehen ist mit einer oberen Kennlinie und einer unteren Kennlinie als Schaltschwellen.

6. Vorrichtung nach einem der vorherigen Ansprüche, **dadurch gekennzeichnet, daß** sie angepaßt ist zum nachträglichen Einbau in bestehende Abgasturboladersysteme.

7. Abgasturbolader zum Verdichten des Luftmassestroms von Motoren, insbesondere Dieselmotoren, mit einer variablen Turbinengeometrie zum Verstellen des Verdichtungsverhältnisses, **gekennzeichnet durch** eine Vorrichtung nach einem der Ansprüche 1 bis 6.

8. Abgasturbolader nach Anspruch 7, **dadurch gekennzeichnet, daß** die Verzögerungseinrichtung (4) in dem Ladedruckregler (2) integriert ist.

9. Abgasturbolader nach Anspruch 7, **dadurch gekennzeichnet, daß** die Verzögerungseinrichtung (4) ein Bestandteil einer zentralen Motorsteuerungseinrichtung ist.

## Claims

1. Device for switching an exhaust-gas turbocharger (1), having variable turbine geometry, for internal combustion engines, in particular an exhaust-gas turbocharger for diesel engines, having a closed-loop charge pressure controller (2) for controlling the charge pressure in a closed-loop fashion, wherein the exhaust-gas turbocharger (1) is switched, by means of a switching signal P, from an operating mode A with closed-loop control with the closed-loop charge pressure controller (2) into an operating mode B without closed-loop control but with open-loop charge pressure control (3),
**characterized in that**
a delay device (4) is provided, by means of which the switching signal P can be generated in a time-delayed fashion.

2. Device according to Claim 1, **characterized in that** the switching signal P can be variably delayed as a function of the operating state of the engine.

3. Device according to Claim 1 or 2, **characterized in that** the delay device (4) has an engine-dependent time constant K.

4. Device according to Claim 3, **characterized by** a time constant K of 2 seconds.

5. Device according to one of the preceding claims, **characterized in that**, to generate the switching signal P, a hysteresis circuit (5) is provided, having an upper characteristic curve and a lower characteristic curve as switching thresholds.

6. Device according to one of the preceding claims, **characterized in that** it is adapted to be retrospectively installed in existing exhaust-gas turbocharger systems.

7. Exhaust-gas turbocharger for compressing the air mass flow of engines, in particular diesel engines, having variable turbine geometry for adjusting the compression ratio, **characterized by** a device according to one of Claims 1 to 6.

8. Exhaust-gas turbocharger according to Claim 7, **characterized in that** the delay device (4) is integrated into the closed-loop charge pressure controller (2).

9. Exhaust-gas turbocharger according to Claim 7, **characterized in that** the delay device (4) is a constituent of a central open-loop engine control device.

## Revendications

1. Dispositif de commutation d'un turbocompresseur (1) pour moteurs à combustion qui présente une turbine à géométrie variable, en particulier d'un turbocompresseur pour moteurs diesel, avec un régulateur de pression de suralimentation (2) pour régler la pression de suralimentation, le turbocompresseur (1) étant commuté au moyen d'un signal de commutation P entre un fonctionnement A régulé avec le régulateur de pression de suralimentation (2) et un fonctionnement B non régulé mais avec une commande de pression de suralimentation (3),
**caractérisé en ce qu'**
un dispositif de temporisation (4) permet de générer le signal de commutation P avec un temps de temporisation.

2. Dispositif selon la revendication 1,
**caractérisé en ce que**
le signal de commutation P peut être retardé de manière variable en fonction de l'état de fonctionnement du moteur.

3. Dispositif selon la revendication 1 ou 2,
**caractérisé en ce que**
le dispositif de temporisation (4) présente une constante de temps K asservie au moteur.

4. Dispositif selon la revendication 3,
**caractérisé par**
une constante de temps K de 2 secondes.

5. Dispositif selon l'une quelconque des revendications précédentes,
**caractérisé en ce qu'**
une commutation par hystérésis (5) permet de produire le signal de commutation P avec une courbe caractéristique supérieure et une courbe caractéristique inférieure qui servent de seuils de commutation.

6. Dispositif selon l'une quelconque des revendications précédentes,
**caractérisé en ce qu'**
il est adapté pour être monté ultérieurement dans des systèmes de turbocompresseurs existants.

7. Turbocompresseur destiné à comprimer le débit d'air massique des moteurs, en particulier des moteurs diesel, comprenant une turbine à géométrie variable pour régler le taux de compression,
**caractérisé par**
un dispositif selon l'une quelconque des revendications 1 à 6.

8. Turbocompresseur selon la revendication 7,
**caractérisé en ce que**
le dispositif de temporisation (4) est intégré dans le régulateur de pression de suralimentation (2).

9. Turbocompresseur selon la revendication 7,
**caractérisé en ce que**
le dispositif de temporisation (4) est un composant d'un dispositif de commande de moteur centralisée.
